# DEMANDE DE BREVET EUROPEEN

(11) **EP 0 542 587 A1**
(43) Date de publication de la demande: **19.05.1993**
(21) Numéro de dépôt: 92402867.3
(22) Date de dépôt: 20.10.1992
(51) Int. Cl.: E04B 9/18, F16B 15/00

(54) **Suspente pour faux plafond à accrochage par languette élastiques**

(30) Priorité: 12.11.1991 FR 9113893
(71) Demandeur: PLATRES KNAUF ET CIE, F-77165 St. Soupplets (FR)
(72) Inventeur: Sanchez, José, F-68610 Lautenbach Zell (FR)
(74) Mandataire: Netter, André

(57) **Abrégé**

Dans une platine (101) en tôle d'acier ressort, destinée à être insérée dans une fente, sont découpées des languettes (105) faisant saillie élastiquement hors du plan de celle-ci. Chaque languette présente deux pointes propres à s'accrocher sur une paroi de la fente, écartées l'une de l'autre dans la direction de l'axe d'articulation (106) de la languette sur la platine, d'une distance mutuelle qui peut varier élastiquement grâce à une ligne de pliage médiane (109) de la languette. Cette double élasticité améliore la résistance à l'arrachement du dispositif.

## Description

L'invention concerne un dispositif de suspension ou "suspente" pour suspendre un élément de construction, notamment un faux plafond, à une structure porteuse présentant une fente ouverte vers le bas, par exemple un plancher formé de poutrelles et de hourdis séparés latéralement par des interstices.

FR-A-2 426 778 décrit un tel dispositif comprenant une platine formée par une plaque mince, propre à être insérée dans la fente et dans laquelle sont découpées des languettes articulées élastiquement par rapport à la platine et qui s'écartent obliquement au-delà d'une face de celle-ci en formant des pointes propres à s'accrocher sur une paroi de la fente.

Ce dispositif connu fournit une résistance à l'arrachement de l'ordre de 90 kg.

Le but de l'invention est d'augmenter sensiblement cette résistance à l'arrachement.

Ce résultat est obtenu, selon l'invention, par un dispositif du type défini en introduction, comprenant une platine formée par une plaque mince, propre à être insérée dans ladite fente et dans laquelle est découpée au moins une première languette articulée élastiquement par rapport à la platine et qui s'écarte obliquement au-delà d'une première face de celle-ci en formant une première pointe propre à s'accrocher sur une première paroi de la fente, caractérisé en ce que la languette présente une seconde pointe propre à s'accrocher sur ladite première paroi, écartée de la première pointe dans la direction de l'axe d'articulation de la première languette sur la platine, et en ce que la languette est en outre pliée selon au moins une ligne passant entre les deux pointes de façon à présenter une élasticité supplémentaire dans ladite direction.

De par la double élasticité de la languette, ses deux pointes sont sollicitées d'une part conjointement vers la première paroi de la fente, d'autre part l'une vers l'autre le long de cette paroi, ce qui renforce l'accrochage de la languette.

Des caractéristiques optionnelles avantageuses de l'invention sont énoncées ci-après :
- La découpe de la première languette forme dans la platine une ouverture distante du bord périphérique de celle-ci.
- Ladite ouverture présente deux bords latéraux opposés qui s'écartent l'un de l'autre à partir dudit axe d'articulation.
- Ladite ouverture présente un bord d'extrémité, opposé à l'axe d'articulation, sensiblement rectiligne et parallèle à celui-ci, ou définissant une pointe à angle obtus dirigée vers celui-ci.
- Au moins une seconde languette à deux pointes et à double élasticité s'écarte obliquement au-delà de la seconde face de la platine de façon à s'accrocher sur la seconde paroi de la fente, les axes d'articulation des première et seconde languettes sur la platine ayant des directions différentes.
- L'axe d'articulation de la première languette est sensiblement perpendiculaire à la direction de travail du dispositif de suspension, et au moins deux secondes languettes sont prévues dont les axes d'articulation font respectivement avec celui de la première languette des angles aigus de sens opposés.
- La découpe de la seconde languette forme dans la platine une ouverture adjacente au bord de celle-ci.
- Des régions marginales de la platine sont recourbées à l'opposé de ladite première face et présentent des griffes propres à s'accrocher sur la seconde paroi de la fente.
- La platine est sensiblement plane sous réserve le cas échéant de ses régions marginales recourbées.

D'autres caractéristiques et avantages de l'invention ressortiront de la description détaillée donnée ci-après de quelques exemples de réalisation, et des dessins annexés dans lesquels :
- les figures 1, 2 et 3 sont des vues respectivement de face, de côté et de dessus d'un premier exemple de réalisation d'un dispositif selon l'invention ; et
- les figures 4, 5 et 6 sont des vues analogues aux figures 1 à 3, relatives à un second exemple de réalisation.

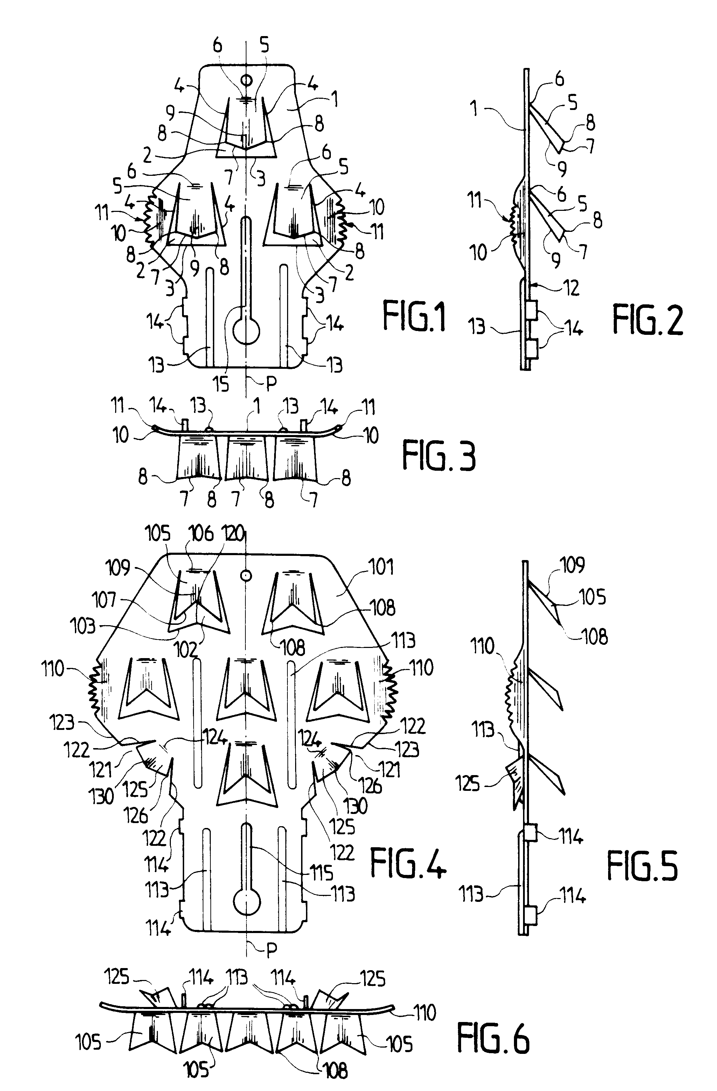

Le dispositif illustré aux figures 1 à 3 est constitué par une pièce unique en tôle d'acier ressort ou de tout autre métal présentant des caractéristiques équivalentes formant une platine sensiblement plane 1 à l'intérieur de laquelle sont ménagées trois ouvertures égales 2 en forme de trapèze isocèle. La grande base 3, horizontale et tournée vers le bas de la figure 1, et les deux côtés 4, adjacents à celle-ci, de chaque ouverture trapézoïdale 2 sont découpés pour former dans la tôle une languette 5 qui est pliée par rapport à la platine selon un axe d'articulation 6 définissant la petite base du trapèze. Chaque languette 5 présente donc un bord d'extrémité 7 terminé par deux pointes 8 à angle aigu correspondant aux angles aigus entre la base 3 d'une part et les côtés adjacents 4 d'autre part de l'ouverture 2. Elle est en outre pliée selon une ligne médiane verticale 9 de façon à permettre une variation élastique de la distance entre les deux pointes 8.

La platine 1 présente, symétriquement à gauche et à droite, des régions marginales 10 recourbées à l'opposé de la face 12 de la platine au-delà de laquelle font saillie les pattes 5 et se terminant par des bords arrondis crénelés 11.

Le dispositif illustré est destiné à être introduit, dans l'orientation montrée aux figures 1 et 2, dans une fente verticale séparant par exemple une poutrelle d'un hourdis. Les languettes 5 sont alors inclinées vers le bas à partir des axes d'articulation 6 et les pointes 8 viennent s'appliquer élastiquement et s'accrocher sur une première paroi de la fente, tandis que les griffes formées par les bords crénelés 11 viennent s'accrocher sur la paroi opposée de la fente.

Bien entendu, l'axe d'articulation 6 ou la ligne de pliage 9 de chaque languette 5 peut être non pas une ligne géométrique, mais un arrondi d'une certaine largeur. Quoi qu'il en soit, la direction de l'axe d'articulation est la direction perpendiculaire au plan dans lequel se déplace un point quelconque de la languette lors de son pivotement par rapport à la platine. Par ailleurs, la ligne de pliage médiane 9 peut être remplacée par deux lignes de pliage latérales s'étendant chacune entre un point du bord d'extrémité 7 de la languette, qui peut être le milieu de celui-ci, et un point d'un bord latéral de la languette, qui peut être son extrémité commune avec l'axe d'articulation.

Le dispositif comporte également des nervures de raidissement 13, ainsi que des pattes 14 et une ouverture 15 allongée dans la direction verticale pour sa solidarisation dans une position réglable en hauteur avec une autre pièce présentant des moyens de liaison avec un faux plafond, pour constituer la suspente proprement dite.

Le dispositif des figures 4 à 6 comprend des éléments identiques ou similaires aux éléments du dispositif des figures 1 à 3, qui sont désignés par les mêmes numéros de référence additionnés du nombre 100. Seules les caractéristiques qui différencient le second dispositif du premier seront décrites ci-après.

A l'intérieur de la platine 101 sont ménagées six ouvertures 102, en formant autant de languettes 105 articulées élastiquement. Les côtés 103 de ces ouvertures opposés aux axes d'articulation 106, au lieu d'être rectilignes et parallèles à ceux-ci, sont formés chacun par deux segments de droite formant entre eux une pointe à angle obtus 120 tournée vers l'axe 106. Le bord correspondant 107 des languettes est donc aussi formé de deux segments de droite formant, avant pliage selon la ligne médiane 109, un angle rentrant. Outre les six ouvertures intérieures 102 sont prévues dans la platine deux ouvertures 121 disposées symétriquement à gauche et à droite de la figure 4, définies chacune par deux bords découpés 122 adjacents au bord latéral 123 de la platine et par un axe d'articulation 124 pour une languette élastique 125 formée par la tôle constitutive de la platine lors de la découpe des bords 122. Chaque axe d'articulation 124 est disposé obliquement et les bords découpés 122 s'écartent l'un de l'autre depuis cet axe vers le bord 123 de la platine. Les languettes 125 font saillie par rapport au plan de la platine à l'opposé des languettes 105, c'est-à-dire du même côté que les régions marginales 110 à bords crénelés de la platine. Elles s'étendent, à partir de l'axe 124, obliquement vers le bas et vers l'extérieur par rapport au plan vertical de symétrie P du dispositif. Elles présentent des pointes à angles aigus 126 et des lignes de pliage médianes 130 qui jouent les mêmes rôles que les pointes 108 et les lignes de pliage 109 des languettes 105. En utilisation, les pointes 126 viennent s'accrocher élastiquement sur la seconde paroi de la fente pour améliorer la résistance à l'arrachement du dispositif. Leur disposition symétrique conduit à une force résistante résultante orientée verticalement comme l'est la force résistante de chacune des languettes 105.

Les caractéristiques spécifiques des dispositifs décrits (nombre et forme des languettes 5 ou 105, présence ou non des languettes 125) peuvent être combinées à volonté. Les bords recourbés crénelés 10, 110 peuvent être supprimés. En fonction du nombre de languettes, qui peut naturellement être quelconque, et de la présence ou non de ces derniers bords et des languettes 125, la résistance à l'arrachement peut être améliorée de cinquante à cent pour cent par rapport aux dispositifs connus.

## Revendications

1. Dispositif pour suspendre un élément de construction à une structure porteuse présentant une fente ouverte vers le bas, comprenant une platine (1) formée par une plaque mince, propre à être insérée dans ladite fente et dans laquelle est découpée au moins une première languette (5) articulée élastiquement par rapport à la platine et qui s'écarte obliquement au-delà d'une première face (12) de celle-ci en formant une première pointe (8) propre à s'accrocher sur une première paroi de la fente, caractérisé en ce que la languette présente une seconde pointe (8) propre à s'accrocher sur ladite première paroi, écartée de la première pointe dans la direction de l'axe d'articulation (6) de la première languette sur la platine, et en ce que la languette est en outre pliée selon au moins une ligne (9) passant entre les deux pointes de façon à présenter un élasticité supplémentaire dans ladite direction.

2. Dispositif selon la revendication 1, caractérisé en ce que la découpe de la première languette forme dans la platine une ouverture (2) distante du bord de celle-ci.

3. Dispositif selon la revendication 2, caractérisé en ce que ladite ouverture présente deux bords latéraux opposés (4) qui s'écartent l'un de l'autre à partir dudit axe d'articulation.

4. Dispositif selon l'une des revendications 2 et 3, caractérisé en ce que ladite ouverture présente un bord d'extrémité (3), opposé à l'axe d'articulation, rectiligne et parallèle à celui-ci.

5. Dispositif selon l'une des revendications 2 et 3, caractérisé en ce que ladite ouverture (102) présente un bord d'extrémité (103), opposé à l'axe d'articulation (106), qui définit une pointe (108) à angle obtus dirigée vers celui-ci.

6. Dispositif selon l'une des revendications précédentes, caractérisé en ce qu'au moins une seconde languette (125) à deux pointes (126) et à double élasticité s'écarte obliquement au-delà de la seconde face de la platine (101) de façon à s'accrocher sur la seconde paroi de la fente, les axes d'articulation (106,124) des première et seconde languettes (105,125) sur la platine ayant des directions différentes.

7. Dispositif selon la revendication 6, caractérisé en ce que l'axe d'articulation (106) de la première languette est sensiblement perpendiculaire à la direction de travail du dispositif de suspension, et en ce qu'au moins deux secondes languettes sont prévues dont les axes d'articulation font respectivement avec celui de la première languette des angles aigus de sens opposés.

8. Dispositif selon l'une des revendications 6 et 7, caractérisé en ce que la découpe de la seconde languette forme dans la platine une ouverture (121) adjacente au bord (123) de celle-ci.

9. Dispositif selon l'une des revendications précédentes, caractérisé en ce que des régions marginales (10) de la platine sont recourbées à l'opposé de ladite première face et présentent des griffes propres à s'accrocher sur la seconde paroi de la fente.

10. Dispositif selon l'une des revendications précédentes, caractérisé en ce que la platine est sensiblement plane sous réserve le cas échéant de ses régions marginales recourbées (10).

11. Dispositif selon l'une des revendications précédentes, caractérisé en ce que la platine et les languettes sont formées d'une seule pièce en acier ressort ou analogue.
